# EUROPEAN PATENT APPLICATION

(11) **EP 4 703 203 A1**
(43) Date of publication of application: **04.03.2026**
(21) Application number: 25198062.9
(22) Date of filing: 26.08.2025
(51) Int. Cl.: B60Q 1/00, B60Q 1/26, B60Q 1/38, B60Q 1/44, B62J 6/045, B62J 6/05, F21S 43/14, F21S 43/20, F21S 43/50, F21W 103/20, F21W 103/35, F21W 107/17

(54) **VEHICLE LIGHTING DEVICE**

(30) Priority: 28.08.2024 JP 2024146618
(71) Applicant: Mitsuba Corporation, Kiryu-shi, Gunma 376-8555 (JP)
(72) Inventor: MURAKOSHI, Tetsuya, Kiryu-shi, Gunma, 3768555 (JP)
(74) Representative: Becker Kurig & Partner Patentanwälte mbB

(57) **Abstract**

Provided is a vehicle lighting device in which mixing of light from multiple light sources can be suppressed. The vehicle lighting device includes: a first light emitting part (41), irradiating light from a first light source; a second light emitting part (42), irradiating light from a second light source; and a wall part (31), blocking light irradiated from the second light emitting part (42) toward the first light emitting part (41). The first light emitting part (41) and the second light emitting part (42) are arranged relative to each other in a vehicle width direction. The wall part (31) is positioned between the first light emitting part (41) and the second light emitting part (42) in the vehicle width direction. A notch (31A) that allows light irradiated from the second light emitting part (42) in the vehicle width direction to pass through is formed in the wall part (31).

## Description

### Technical Field

The present invention relates to a vehicle lighting device.

### Related Art

Patent Document 1 discloses a vehicle lighting device that includes a light source and a light emitting part that receives light from the light source and emits light.

### Prior Art Documents

### Patent Documents

[Patent Document 1] Japanese Patent Laid-Open No. 2022-133496

### SUMMARY

### Technical Problem

In the vehicle lighting device as described above, in the case where multiple light sources are provided, when multiple light sources are lit simultaneously, there is a possibility that light from each light source may mix and visibility may be reduced.

The present invention has been made to solve the above problem, and an object thereof is to provide a vehicle lighting device in which mixing of light from multiple light sources can be suppressed.

### Solution to Problem

To solve the above problem, one embodiment of the present invention provides a vehicle lighting device, including: a first light emitting part, irradiating light from a first light source; a second light emitting part, irradiating light from a second light source; and a wall part, blocking light irradiated from the second light emitting part toward the first light emitting part. The first light emitting part and the second light emitting part are arranged relative to each other in a vehicle width direction of a vehicle. The wall part is positioned between the first light emitting part and the second light emitting part in the vehicle width direction. A notch that allows light irradiated from the second light emitting part in the vehicle width direction to pass through is formed in the wall part.

### Effects of Invention

According to the invention, mixing of light from multiple light sources can be suppressed.

### BRIEF DESCRIPTION OF THE DRAWINGS

FIG. 1A is a front view showing a vehicle lighting device of the present embodiment.
FIG. 1B is a front view showing the vehicle lighting device of the present embodiment.
FIG. 2 is a top view showing the vehicle lighting device of the present embodiment.
FIG. 3 is a perspective view showing the vehicle lighting device of the present embodiment.
FIG. 4A is a perspective view showing some components of the vehicle lighting device of the present embodiment.
FIG. 4B is a perspective view showing some components of the vehicle lighting device of the present embodiment.
FIG. 4C is a perspective view showing some components of the vehicle lighting device of the present embodiment.
FIG. 4D is a perspective view showing some components of the vehicle lighting device of the present embodiment.

### DESCRIPTION OF THE EMBODIMENTS

Hereinafter, embodiments of the present invention will be described with reference to the drawings.

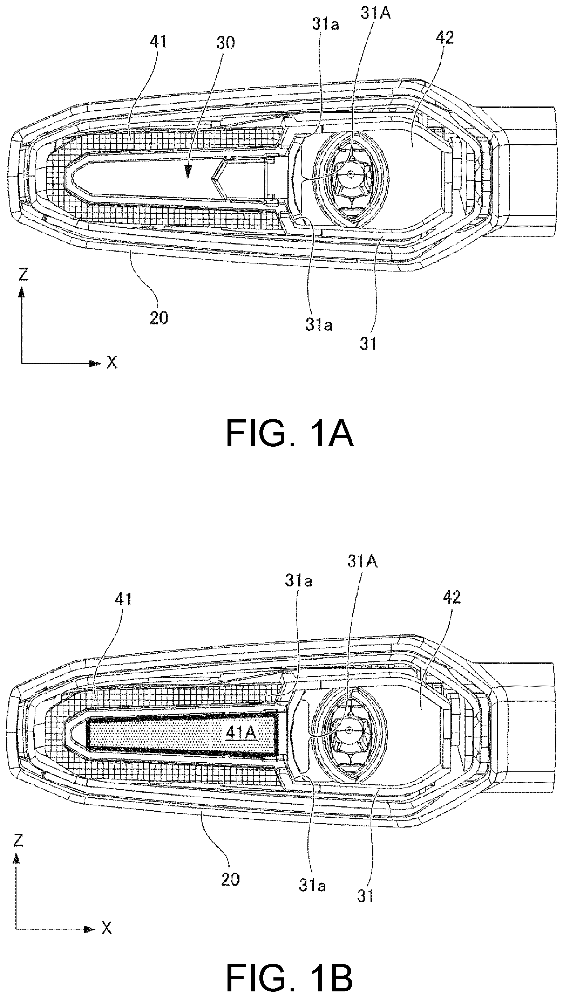

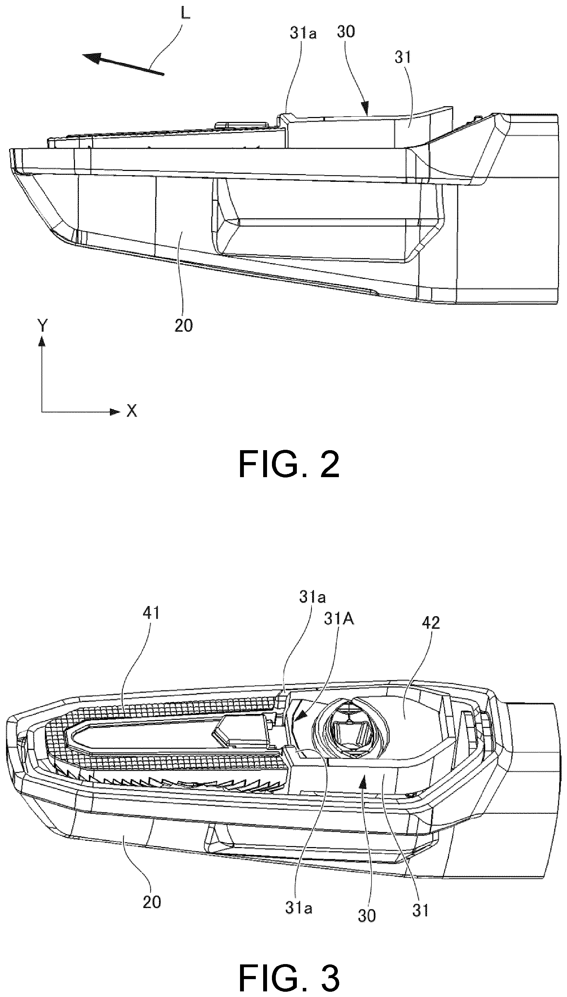

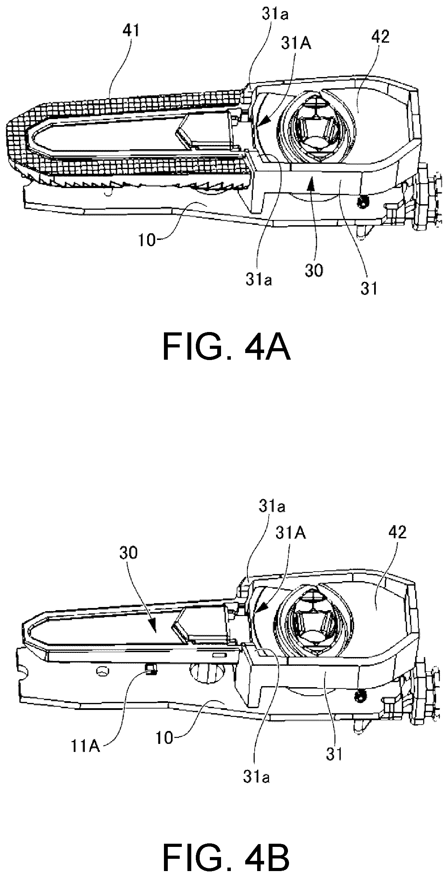

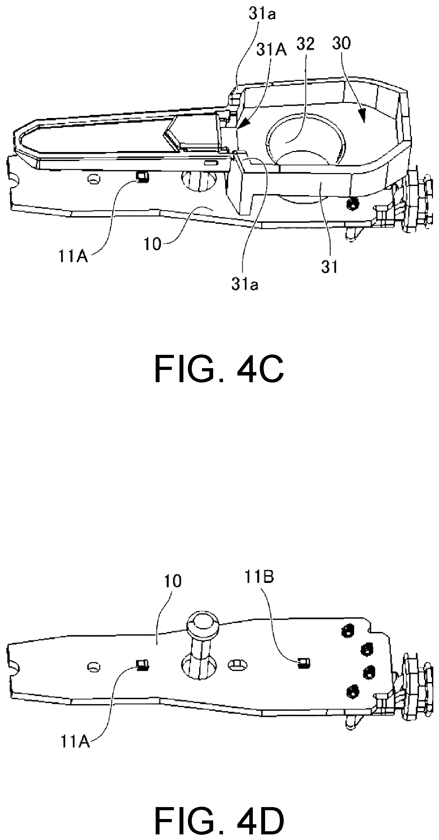

FIG. 1A and FIG. 1B are front views showing a vehicle lighting device of the present embodiment, FIG. 2 is a top view showing the vehicle lighting device of the present embodiment, FIG. 3 is a perspective view showing the vehicle lighting device of the present embodiment, and FIG. 4A to FIG. 4D are perspective views showing some components of the vehicle lighting device of the present embodiment.

Hereinafter, as the vehicle lighting device of the present embodiment, a lighting device used as a left lamp of a left and right pair of rear lamps of a two-wheeled vehicle will be illustrated.

The vehicle lighting device of the present embodiment includes: a substrate 10, on which a light source 11A (first light source) and a light source 11B (second light source) each including a light emitting diode element are mounted; and a housing 20, covering the substrate 10 from a front (-Y direction) side of a vehicle body. Furthermore, the vehicle lighting device of the present embodiment includes: an inner cover 30, overlapped on the substrate 10; an inner lens 41 (first light emitting part), irradiating light from the light source 11A toward the rear of a vehicle; and an inner lens 42 (second light emitting part), irradiating light from the light source 11B toward the rear of the vehicle.

An outer lens (not shown) that irradiates light from the light source 11A and the light source 11B in the Y direction (rear of the vehicle body) being a direction opposite to a traveling direction of the vehicle body is attached to the housing 20. The substrate 10, the inner cover 30, the inner lens 41, and the inner lens 42 are accommodated inside the housing 20 and the outer lens.

The light source 11A functions as a light source for a turn signal of amber light, and the light source 11B functions as a light source for a stop lamp of red light. As lighting states in the vehicle lighting device of the present embodiment, there exists, in addition to a state (first state) in which only the light source 11A is lit and a state (first state) in which only the light source 11B is lit, a state (second state) in which the light source 11A and the light source 11B are lit simultaneously. That is, there exist a state in which only the turn signal is lit, a state in which only the stop lamp is lit, and a state in which both the turn signal and the stop lamp are lit.

In the vehicle lighting device of the present embodiment, the light source 11A and the light source 11B are arranged relative to each other in a vehicle width direction (X direction) of the vehicle, and correspondingly, the inner lens 41 and the inner lens 42 are also arranged relative to each other in the vehicle width direction (X direction) of the vehicle. The positions of the turn signal and the stop lamp may be reversed. That is, the inner lens 41 may be used as a lens for the stop lamp of red light, and the inner lens 42 may be used as a lens for the turn signal of amber light.

The inner cover 30 is provided with a wall part 31 that rises toward the rear (Y direction) of the vehicle so as to surround the inner lens 42. A notch 31A is formed in a portion of the wall part 31. The wall part 31 is provided with a pair of regions 31a that are respectively arranged adjacent to the notch 31A and separated in an up-down direction (Z direction) with the notch 31A sandwiched therebetween. The region 31a is positioned between the inner lens 41 and the inner lens 42 in the vehicle width direction (X direction) of the vehicle, and functions to block light irradiated from the inner lens 42 toward the inner lens 41.

In the inner cover 30, a through hole 32 (FIG. 4C) is formed extending in the Y direction substantially about an optical axis of the light source 11B. The inner lens 42 is accommodated in the through hole 32.

Next, the function of the wall part 31 of the inner cover 30 in the vehicle lighting device of the present embodiment will be described.

In the vehicle lighting device of the present embodiment, the shape of the inner lens 42 is designed so that light from the inner lens 42 is irradiated toward the rear (Y direction) of the vehicle, and that light is irradiated with a certain intensity to a desired light distribution range including a direction close to the vehicle width direction (-X direction) of the vehicle. Accordingly, the light irradiated from the inner lens 42 is irradiated to a direction (for example, direction of arrow L in FIG. 2) close to the vehicle width direction (-X direction) of the vehicle via the notch 31A sandwiched between the pair of regions 31a. Hence, the light from the inner lens 42 can be irradiated at a wide angle. For example, it is possible to easily visually recognize the lighting of the turn signal for a left turn even from the left rear side of the vehicle. By using a reflector in addition to the inner lens 42, the light distribution range may be expanded.

On the other hand, in the light irradiated from the inner lens 42, since the light directed toward the inner lens 41 is blocked by the region 31a of the wall part 31, the light from the inner lens 42 is effectively suppressed from entering the inner lens 41. Hence, even in the state in which both the turn signal and the stop lamp are lit, mixing of the amber light of the turn signal and the red light of the stop lamp can be effectively suppressed. Accordingly, identification performance for emission color of the rear lamp can be improved, and the driver's intention can be appropriately transmitted to those around the vehicle.

As shown in FIG. 1B, the inner lens 41 presents a curved U-shape including a recess 41A as viewed from the rear of the vehicle. A region corresponding to the recess 41A is not only a region where the inner lens 41 is not present and the light from the light source 11A is blocked by the inner cover 30 in the Y direction, but also a region that does not emit light during lighting of the turn signal. On the other hand, the region corresponding to the recess 41A corresponds to a region through which the light irradiated from the inner lens 42 to the surroundings of the vehicle via the notch 31A passes. That is, the inner lens 41 has a shape that avoids the region where the light from the inner lens 42 is irradiated via the notch 31A. Hence, even in the state in which both the turn signal and the stop lamp are lit, mixing of the amber light of the turn signal and the red light of the stop lamp can be avoided in the recess 41A. In this way, in the vehicle lighting device of the present embodiment, even though the inner lens 41 and the inner lens 42 approach each other, color mixing of the amber light of the turn signal and the red light of the stop lamp can be effectively suppressed while the conditions of the light distribution range are satisfied. That is, while the rear lamp can be reduced in size and improved in design, the performance required to transmit the driver's intention can be achieved.

For example, similar effects can be obtained in cases where the inner lens 41 presents a V-shape including a recess corresponding to the recess 41A as viewed from the rear of the vehicle.

As described above, according to the present embodiment, in the light irradiated from the inner lens 42, since the light directed toward the inner lens 41 is blocked by the region 31a of the wall part 31, the light from the inner lens 42 is effectively suppressed from entering the inner lens 41. Hence, the mixing of the amber color of the turn signal and the red light of the stop lamp can be effectively suppressed. The light irradiated from the inner lens 42 can be irradiated in a desired light distribution direction via the notch 31A.

Regarding the above embodiments of the present invention, the following supplementary notes are further disclosed.

### [Supplementary Note 1]

A vehicle lighting device, including:
a first light emitting part (41), irradiating light from a first light source (11A);
a second light emitting part (42), irradiating light from a second light source (11B); and
a wall part (31), blocking light irradiated from the second light emitting part toward the first light emitting part, in which
the first light emitting part and the second light emitting part are arranged relative to each other in a vehicle width direction of a vehicle;
the wall part is positioned between the first light emitting part and the second light emitting part in the vehicle width direction; and
a notch (31A) that allows light irradiated from the second light emitting part in the vehicle width direction to pass through is formed in the wall part.

According to the configuration described in Supplementary Note 1, since the wall part that blocks light irradiated from the second light emitting part toward the first light emitting part is provided, mixing of lighting colors can be effectively suppressed. Since the notch that allows light irradiated from the second light emitting part in the vehicle width direction to pass through is formed in the wall part, light can be irradiated at a wide angle from the second light emitting part.

### [Supplementary Note 2]

In the vehicle lighting device described in Supplementary Note 1, the first light emitting part has a shape that avoids a region where light from the second light emitting part is irradiated in the vehicle width direction via the notch.

According to the configuration described in Supplementary Note 2, in the region, mixing of light from the first light emitting part and light from the second light emitting part can be avoided.

### [Supplementary Note 3]

In the vehicle lighting device described in Supplementary Note 2, the first light emitting part presents a curved shape including a recess corresponding to the region as viewed from the rear of the vehicle.

According to the configuration described in Supplementary Note 3, in the recess, mixing of light from the first light emitting part and light from the second light emitting part can be avoided.

### [Supplementary Note 4]

In the vehicle lighting device described in Supplementary Note 1, light irradiated from the first light emitting part and light irradiated from the second light emitting part have different emission colors from each other.

According to the configuration described in Supplementary Note 4, light irradiated from the first light emitting part and light irradiated from the second light emitting part can be easily identified.

### [Supplementary Note 5]

In the vehicle lighting device described in Supplementary Note 1, lighting states of the first light source and the second light source include a first state in which only one of the first light source and the second light source is lit, and a second state in which both the first light source and the second light source are lit simultaneously.

According to the configuration described in Supplementary Note 5, in both the first state and the second state, the lighting state can be easily identified.

### Description of Reference Numerals

11A, 11B: light source
20: housing
30: inner cover
31: wall part
31A: notch
41: inner lens
41A: recess
42: inner lens

## Claims

1. A vehicle lighting device, **characterized by** comprising:
a first light emitting part (41), irradiating light from a first light source (11A);
a second light emitting part (42), irradiating light from a second light source (11B); and
a wall part (31), blocking light irradiated from the second light emitting part (42) toward the first light emitting part (41), wherein
the first light emitting part (41) and the second light emitting part (42) are arranged relative to each other in a vehicle width direction of a vehicle;
the wall part (31) is positioned between the first light emitting part (41) and the second light emitting part (42) in the vehicle width direction; and
a notch (31A) that allows light irradiated from the second light emitting part (42) in the vehicle width direction to pass through is formed in the wall part (31).

2. The vehicle lighting device as claimed in claim 1, wherein
the first light emitting part (41) has a shape that avoids a region where light from the second light emitting part (42) is irradiated in the vehicle width direction via the notch (31A).

3. The vehicle lighting device as claimed in claim 2, wherein
the first light emitting part (41) presents a curved shape including a recess (41A) corresponding to the region as viewed from rear of the vehicle.

4. The vehicle lighting device as claimed in claim 1, wherein
light irradiated from the first light emitting part (41) and light irradiated from the second light emitting part (42) have different emission colors from each other.

5. The vehicle lighting device as claimed in claim 1, wherein
lighting states of the first light source (11A) and the second light source (11B) comprise a first state in which only one of the first light source (11A) and the second light source (11B) is lit, and a second state in which both the first light source (11A) and the second light source (11B) are lit simultaneously.
